# EUROPEAN PATENT SPECIFICATION

(11) **EP 1 719 034 B1**
(45) Date of publication and mention of the grant of the patent: **08.12.2010**
(21) Application number: 04777642.2
(22) Date of filing: 07.07.2004
(51) Int. Cl.: G05F 1/00, H05B 41/285

(54) **A PROTECTIVE AND MEASURE DEVICE FOR MULTIPLE COLD CATHODE FLOURESCENT LAMPS**
SCHUTZ- UND MESSEINRICHTUNG FÜR MEHRFACH-KALTKATHODEN-FLUORESZENZLAMPEN
DISPOSITIF DE PROTECTION ET DE MESURE POUR DE MULTIPLES LAMPES FLUORESCENTES A CATHODE FROIDE

(30) Priority: 02.12.2003 US 727848
(43) Date of publication of application: 08.11.2006
(73) Proprietor: Lu, Chao-Cheng, Taipei, Taiwan 11614 (TW)
(72) Inventor: LU, Chao-Cheng, Taipei, Taiwan 11614 (CN)
(74) Representative: Abnett, Richard Charles
(86) International application number: PCT/US2004/021657
(87) International publication number: WO 2005/006377

(56) References cited:
- WO-A-03/098326
- WO-A-2004/019312
- US-A1- 2002 003 525
- US-A1- 2002 180 380
- US-B1- 6 310 444
- US-B2- 6 531 835

## Description

### BACKGROUND OF THE INVENTION

### 1. Field of the Invention

The present invention can be used in the field of the backlighted display of large-size or super-size LCD monitors, which requires parallel connection of multiple cold cathode fluorescent lamps (CCFLs) as light source. The high-frequency power source is typically supplied by an electronic ballast or power exchanger to ensure multiple cold cathode fluorescent lamps of single task working frequency, circuit stability, brightness efficiency, high quality and low distortion. The preferred embodiment provides measuring to such ends and serves as a protective device.

### 2. Background of the Invention

Typical application of CCFL as the backlighted display of LCD monitors requires an inverter and one or two CCFLs. When employed on large LCD monitors or large LCD TV screens, five to ten inverters may be required resulting in the following drawbacks :
1. If one of the tens of CCFLs is defective, the fault cannot be effectively detected, resulting in affecting LCD monitor quality;
2. As variations in high frequency exist among the inverters producing multiple frequency interferences to the LCD monitor, it increases the cost to introduce electromagnetic interference purging;
3. As multiple inverters' high-frequency voltage output will invariably vary, the brightness of the CCFLs will be inconsistent, thus affecting the LCD monitor quality;
4. Cost of employing multiple inverters is higher than a single electronic ballast or a single inverter.

Thus, addressing foregoing deficiencies of typical application of CCFL as the backlighted display of LCD monitors, an innovative solution is proposed.

### SUMMARY OF THE INVENTION

The invention is defined in claim 1 below to which reference may now be made. Advantageous features are set forth in the dependent claims.

A type of device functioning to measure and protect the circuits of CCFLs is designed so that when any one of tens of CCFLs fails, said device can effectively detect the defect to maintain the LCD monitor quality, while concurrently solving the typical multi-inverter practice's drawbacks of frequency interference, structural complexity and unnecessary high cost. These problems have long awaited solutions by users and the inventor alike. After years of electronics related studies together with field research and development experience, aspiration arises to come up with an efficient solution. After repeated designing, investigating, model making and improving, a superior type of electronic device for measuring and protecting the circuits of CCFL has been designed specifically to address said problems.

To effectively provide for the backlighted display required of large-size or super-size LCD monitors an object of the present invention is to provide a device for measuring and protecting CCFLs to solve the deficiencies of typical multiple-inverter applications.

Another object of the present invention is to employ an electronic ballast as a single high-frequency power source to solve typical multiple-inverter application's deficiencies of frequency interference and high cost.

A further object of the present invention is to provide for the backlighted display required of large-size or super-size LCD monitors, LCD TV screens, and LCD advertising mediums.

To solve the deficiencies of typical multiple-inverter employment on large LCD monitors, the present invention includes the following preferred features:
1. The measure element parallel connected to each CCFL of a plurality of CCFLs (hereinafter called "CCFL Cluster"), depending on the CCFL's characteristics and requirements may employ a single high-voltage (HV) precision resistor, or a plurality of diodes, or Zener diode.
2. The photocoupler, depending upon requirement, may be a general photocoupler or photothyristor coupler; the primary is LED, the secondary transistor or thyristor. The power source of the primary is supplied by the voltage of the two ends of the measure element parallel connected to a single CCFL and through limit current resistor, characterised by each CCFL's secondary being serially coupled.
3. To boost the photocoupler's primary sensitivity, depending upon requirement, may employ full-wave rectifier circuit or digital comparator integrated circuit (DCIC), subjecting the AC positive terminal passing through limit current resistor to connect to photocoupler's primary.
4. Because of the photocoupler, CCFL is isolated from the up, down limit comparators, or differential amplifier integrated circuit (DAIC), or DCIC, so prevented from mutual interfering; the requirement of isolation voltage may be met with choice of photocoupler.
5. The up, down limit comparators, or ACIC, or DCIC on the protect circuit can function to initiate "on", "off' of CCFL Cluster, and over current triggered by HF power source's voltage surge, and comparison of settings of under current triggered by under HF voltage, to attain the objective of protecting and enhancing light source quality.
6. The time delay circuit has the characteristic that, when the electronic ballast is functioning stably and that the CCFL Cluster is fully and stably on, the time required for the up, down limit comparators, or ACIC, or DCIC to output to the HF power circuit's initiate thyristor to determine the on/off state of HF power circuit; the time delay circuit's time delay initiate time is determined by the CCFL Cluster's number, characteristic and quality.
7. Power input of the power supply may be from HF power circuit's AC power or HF power circuit's HF oscillator circuit; the output AC power source is supplied to the protect circuit and the time delay circuit.
8. HF power circuit employs full- or half-bridge type electronic ballast equipped with single HF power source, sufficient HF output function, single output voltage, brightness control, working frequency adjustment, start control and protection against irregularities.

### BRIEF DESCRIPTION OF THE DRAWINGS

Fig. 1 is a block diagram illustrating the present invention;
Fig. 2 is a circuit diagram of a preferred embodiment of the present invention;
Fig. 3 is a circuit diagram of a first embodiment of the CCFL measure and protective device according to the present invention;
Fig. 4 is a circuit diagram of a second embodiment of the CCFL measure and protective device according to the present invention;
Fig. 5 is a circuit diagram of a third embodiment of the CCFL measure and protective device according to the present invention;
Fig. 6 is a circuit diagram of a fourth embodiment of the CCFL measure and protective device;
Fig. 7 is a circuit diagram of a fifth embodiment of the CCFL measure and protective device according to the present invention;
Fig. 8 is a circuit diagram of a sixth embodiment of the CCFL measure and protective device according to the present invention;
Fig. 9 is a circuit diagram of a seventh embodiment of the CCFL measure and protective device according to the present invention;
Fig. 10 is a circuit diagram of a eighth embodiment of the CCFL measure and protective device according to the present invention;
Fig. 11 is a circuit diagram of a ninth embodiment of the CCFL measure and protective device according to the present invention;
Fig. 12 is a circuit diagram of the eighth embodiment according to the present invention showing an alternative connection method for the balance resistor VR;
Fig. 13 is a circuit diagram of the ninth embodiment according to the present invention showing an alternative connection method for the balance resistor VR;
Fig. 14 is a circuit diagram of a tenth embodiment according to the present invention showing an alternative connection method for the CCFL measure and protective device;
Fig. 15 is a circuit diagram of an eleventh embodiment of the CCFL measure and protective device according to the present invention;
Fig. 16 is a circuit diagram of a twelfth embodiment of the CCFL measure and protective device according to the present invention.

### DETAILED DESCRIPTION OF THE PREFERRED EMBODIMENT

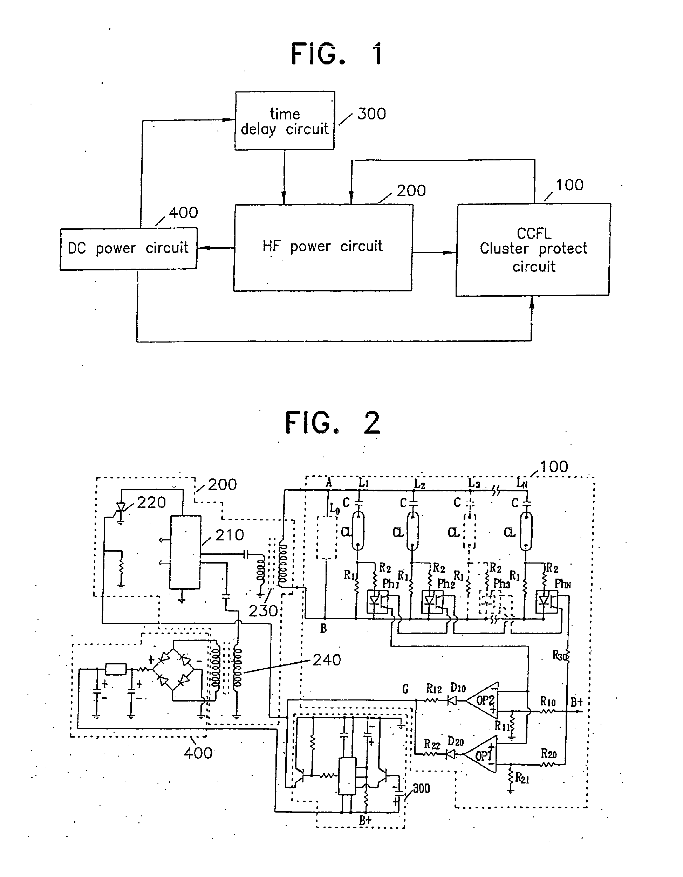

As shown in Fig. 1, the block diagram of the device illustrated consists of: CCFL Cluster protect circuit 100, HF power circuit 200, time delay circuit 300, and DC power circuit 400.

Fig. 2 shows a preferred embodiment of the present invention. HF power circuit 200 is a type of electronic ballast driven by AC power, primarily structured on regular half- or full-bridge type oscillator circuit 210. The HF oscillator voltage passes through the primary coil of HF transformer 230, while the secondary coil detects a high voltage (HV) at AB terminal, connected with L1, L2, L3 ... LN cold cathode fluorescent lamps (collectively called "CCFL Cluster"); wherein Lo represents another CCFL Cluster and protect circuit, thus the circuit consists of two clusters. To meet with the requirement of backlighting super-size LCD screens, multiple clusters may be conjoined. Additionally a HF oscillator voltage passes the primary coil of HF transformer, while the secondary coil detects the input terminal of a low voltage (LV) supply to DC power circuit 400, and the output DC voltage supplies to CCFL Clusters and protect circuit 100 with up, down limit comparators OP1 and OP2 (or DAIC or DCIC), and time delay circuit 300, or power supply by other independent system. HF oscillator circuit 210 is controlled by thyristor silicon control rectifier (SCR) 220 so that when the output of up, down limit comparators OP1 and OP2 is positive, thyristor SCR 220 will be triggered, HF oscillator circuit 210 will stop oscillation; at this time CCFL Clusters have no HF power source, and the backlighting function ceases.

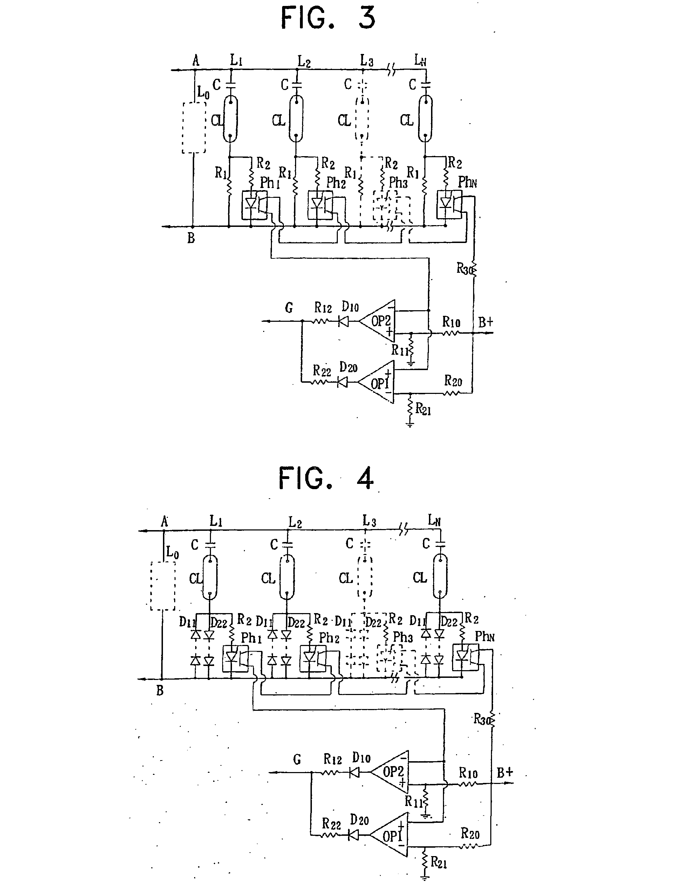

Fig. 3 is a first embodiment of the CCFL measure and protective device according to the present invention. From the circuit diagram, it is evident that the AB terminal is connected with L1, L2, L3 ... LN cold cathode fluorescent lamps; wherein L1, L2, L3 and LN are of the same circuit. L1 consists of HF HV Capacitor C, cold cathode fluorescent lamp CL, measure resistor R1, limit current resistor R2 and primary of photocoupler Ph1. HF HV Capacitor C functions to stabilise HF CCFL flashing; measure resistor R1 adopts HV resistor; the cold cathode fluorescent lamp CL current passes the measure resistor R1 to derive a voltage attenuation; the voltage attenuation's voltage passes through the limit current resistor R2 to the primary of photocoupler Ph1, namely the photocoupler LED terminal, characterised by serial connection of HV Capacitor C and cold cathode fluorescent lamp CL and measure resistor R1; the two terminals are coupled with HF HV terminal, namely AB terminal, and the two ends of measure resistor R1 are parallel connected to limit current resistor 2 and the two ends of the LED terminal of photocoupler Ph1 in serial connection.

When photocoupler Ph1, Ph2, Ph3 ... PhN LED receives power supply, the secondary, namely collect-emitter's two ends will be in 'Turn-on' state ; the two ends of photocoupler Ph1, Ph2, Ph3 ... Phn collect-emitter form serial connection, thus DC power source terminal B+ passes through limit current resistor R30, then passes through collect-emitter serial circuit of photocoupler Ph1, Ph2, Ph3 ... PhN to reach the up comparator OP1 noninverter terminal and the down comparator OP2 inverter terminal. In this case when comparator OP1 noninverter terminal's voltage is higher than the inverter terminal's set voltage, it indicates that the CCFL Clusters are subjected to overly HF voltage that mitigates the resistance at the collect-emitter of photocoupler Ph1, Ph2, Ph3 ... PhN, namely causing the measure resistor R1 to have excessive HF current triggered by HF voltage to drive up voltage at the two ends of measure resistor R1, resulting in resistance reduction between collect-emitters, which leads to the up comparator OP1 noninverter's voltage being higher than the inverter. The output end sends out a positive voltage passing through the diode D20, and the limit current resistor R22 to the thyristor SCR220 of the electronic ballast 200 to conduct SCR220: the HF oscillator circuit 210 stops functioning, AB two terminals drained of HF and HV to protect the CCFL Clusters.

In the case HF and HV are insufficient at the AB terminal, or one of the CCFL Clusters is "on" or spark occurrence at the two ends of the CCFL Clusters due to poor contact, it will lead to driving up the photocoupler's collect-emitter resistance, and the sparks produced will cause unstable collect-emitter "on" and "off". The positive terminal voltage of the down comparator OP2 is greater than the negative terminal, causing the output terminal to send out a voltage, passing the diode D10, then passing the limit current resistor R12 to reach the thyristor SCR220 of the electronic ballast 200. Thus purging the AB two terminals of HF and HV to protect the CCFL Clusters' function and quality. In this preferred embodiment, the up, down limit comparators may be replaced with DCIC or ACIC.

In a second embodiment according to the present invention as shown in Fig. 4, the measure resistor R1 in the diagram of Fig. 3 is changed to first diode cluster D11 and second diode cluster D22; the remainder of the diagram and functioning principle stays. The second diode cluster D22 consists of multiple diodes, characterised by diodes' positive voltage of about 0.7 volt, i.e., serial connection of five diodes arrives at 0.7 volt x 5 = 3.5 volts, using this voltage to supply the limit current resistor R2 and the LED terminal of the photocoupler Ph1, meanwhile the first diode cluster D11 is intended to balance the voltage drop of HF voltage during the positive and negative half cycles. The purpose of the circuit is to accommodate the heavy load of the CCFL CL, in which the first and second diode clusters are disposed at the reverse direction. In this preferred embodiment, the up and down limit comparators may be replaced by DAIC or DCIC.

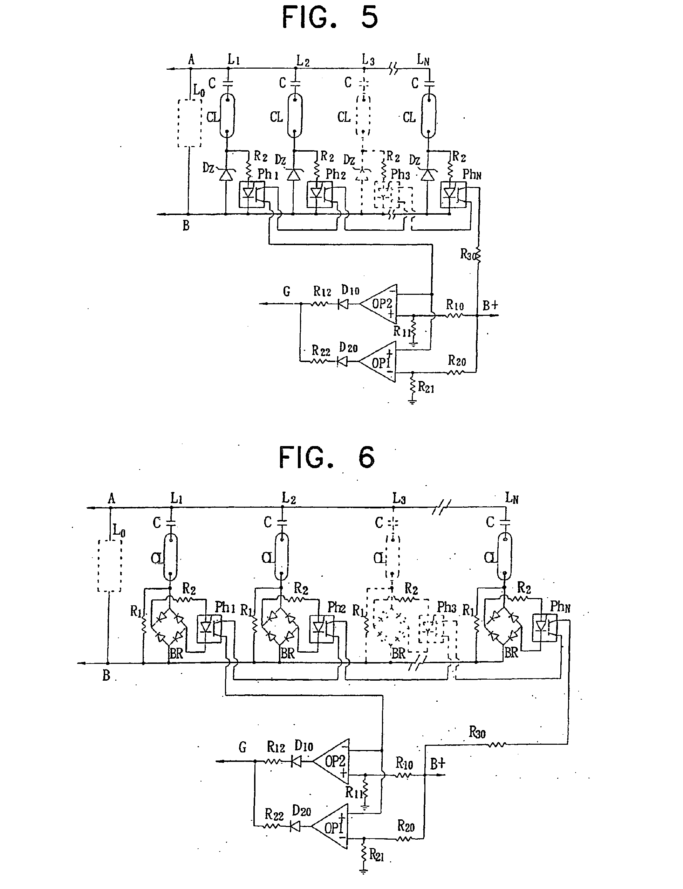

In a third embodiment as shown in Fig. 5, the measure resistor R1 of Fig. 3 is changed to Zener diode Dz; the remainder of the schematic and functioning principle stays. The Zener voltage at the two ends of Zener diode Dz is for supplying the limit current resistor R2 and the LED terminal of the photocoupler Ph1, intended to accommodate small CCFL CL, characterised by simplicity in structure and low in cost. In this preferred embodiment, the up and down limit comparators may be replaced by DAIC or DCIC.

In a fourth embodiment as shown in Fig. 6, to enhance the sensitivity of the photocouplers Ph1, Ph2, Ph3 ... PhN, the two ends of the measure resistor R1 in the diagram of Fig. 3 are parallel connected to the AC terminal of a bridge rectifier BR. The DC positive terminal is coupled with the limit current resistor R2 and the LED terminal of the photocoupler Ph1, then connected the DC negative terminal. The power supplying the LED terminal still comes from the two ends of the measure resistor R1, intended to supply full wave voltage at the LED terminal of the photocouplers Ph1, Ph2, Ph3 ... PhN to boost the sensitivity, characterised by serving as suitable backlighting for small CCFL CL or few numbers of CCFLs. In this preferred embodiment, the up and down limit comparators may be replaced by DAIC or DCIC.

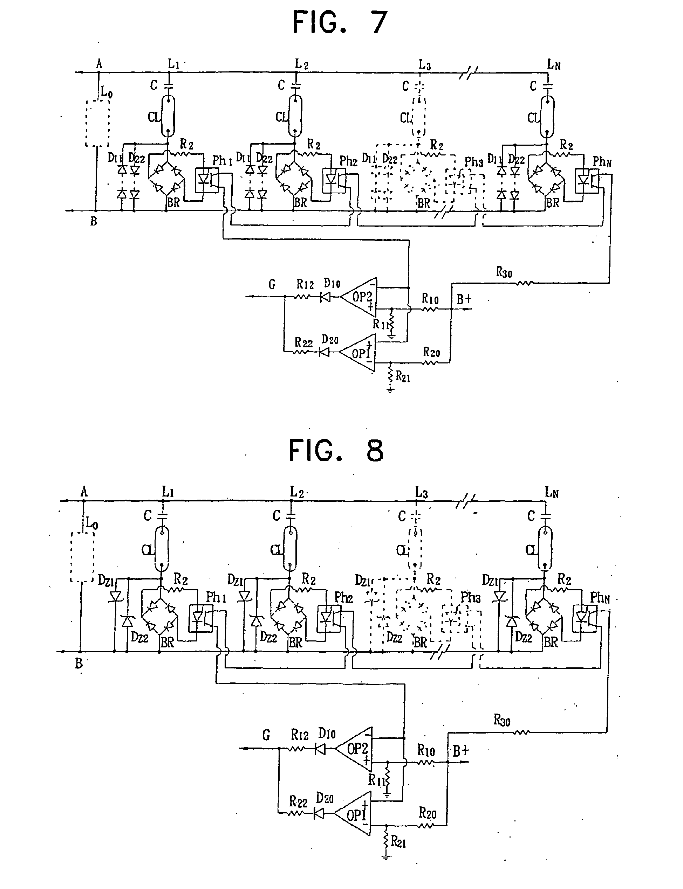

In a fifth embodiment as shown in Fig. 7, the measure resistor R1 from diagram of Fig. 6 is changed to the first and second diode clusters D11 and D22, same as Fig. 4, the functioning principle is the same as Fig. 4 and Fig. 6, intended for supplying large CCFL and photothyristor, characterised by suitability to photothyristor of lower sensitivity. For backlighting super-size LCD screens, photocoupler may be adopted. In this preferred embodiment, the up and down limit comparators may be replaced by DAIC or DCIC.

In a sixth embodiment as shown in Fig. 8, the measure resistor R1 of Fig. 6 schematic is changed to the first and second Zener diode Dz1 and Dz2, the functioning principle is the same as Fig. 6. The voltage for the LED terminal of the photocouplers Ph1, Ph2, Ph3 ... PhN comes from the Zener voltage of the first and second Zener diode Dz1 and Dz2, intended for backlighting small CCFL cluster, characterised by simplicity in structure, low in cost, and boosted photocoupler sensitivity. In this preferred embodiment, the up and down limit comparators may be replaced by DAIC or DCIC.

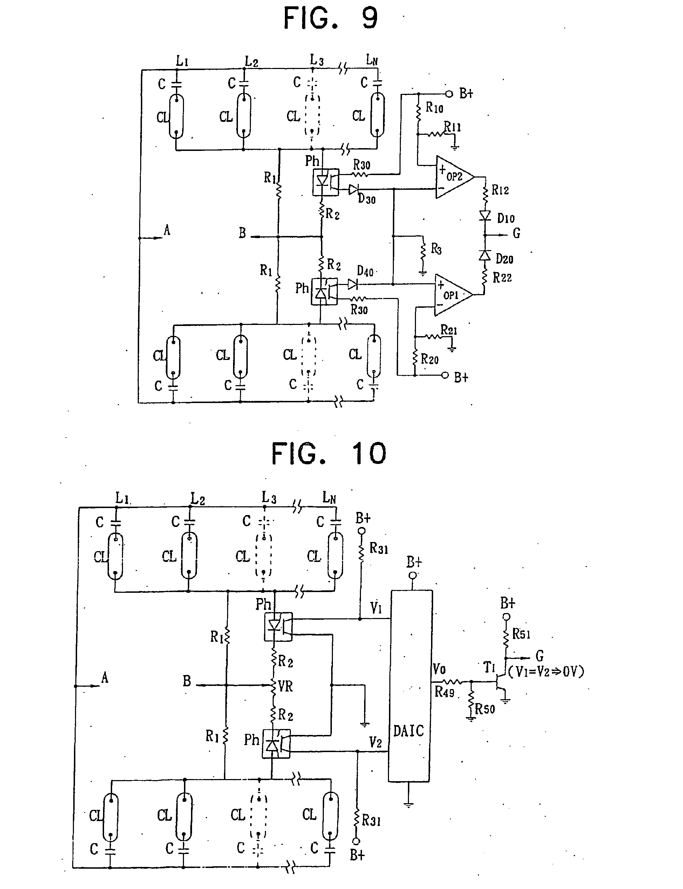

In a seventh embodiment as shown in Fig. 9, two CCFL clusters share a set of up and down comparators OP1 and OP2. Among each cluster, one end of every CCFL is coupled together to jointly use a measure resistor R1. The limit current resistor R2, after serially connected to the LED terminal of photocoupler Ph is joined at the two ends of the measure resistor R1. The collect-emitter end of the photocoupler Ph is connected with diodes D30 and D40, while the N-type terminal of D30 and D40 and grounding resistor R3 are coupled to the noninverter and inverter of the up and down comparators OP1 and OP2, the functioning principle is the same as Fig. 3 schematic. In place of the measure resistor R2, two diode clusters D11 and D22, or Zener diode Dz or Zener diodes Dz1 and Dz2 may be used as replacement depending upon requirement. It is characterised by the purpose of reducing the number of photocouplers and up, down comparators. In this preferred embodiment, the up and down limit comparators may be replaced by DAIC or DCIC.

In an eighth embodiment as shown in Fig. 10, two CCFL clusters share the DAIC differential amplifier. Among each CCFL cluster, one end of every CCFL is coupled together to jointly use a measure resistor R1. The limit current resistor R2, after serially connected to the LED terminal of photocoupler Ph is joined at the two ends of the measure resistor R1. The mid-point of variable resistor VR and one end of the measure resistor R1 are jointly connected to B terminal. The emitter terminal of the photocoupler Ph is grounded, while the collect-emitter terminal is coupled with the V1 terminal of DAIC and one end of a so-called negative resistor R31, and the other end of resistor R31 is connected to B+ power source. The V2 terminal of the DAIC is connected another CCFL cluster, so that when V1=V2, the output voltage V0 is positive, and concomitantly when the DAIC is V1=V2, the output voltage V0 is zero, depending upon the application without restriction. In this diagram, when the DAIC is V1=V2, the output voltage V0 is positive. During the initial use of the two CCFL clusters, the two CCFL clusters may be adjusted by balance resistor VR, for V1 and V2 to derive equivalent voltage. After using for a while when V1 and V2 become unequal, the output voltage of the V0 is zero, indicating one or multiple lamps of the CCFL cluster deteriorated, closed circuited or shorted, to trigger the protect circuit in achieving the purpose of protection. The V0 output terminal of the DAIC is connected to fork resistors R49 and R50 to reach the base terminal of the transistor T1, while the collector terminal is coupled with a resistor R51 as the output terminal, which is then connected to G terminal. The voltage output at the terminal G is opposite to the output voltage of the V0. When V0 is positive and the G terminal is zero (about 0.4v) and V0 is zero, the output of the G terminal is positive. The other end of the resistor R51 is connected to B+ power source. The preferred embodiment is characterised by when two CCFL clusters are uneven in number, or the lamp properties are not uniform, it requires only initial tuning of the balance resistor VR for the two lamp clusters to reach voltage equilibrium before application to achieve the purpose of protection. In this preferred embodiment, the DAIC may be replaced with up and down limit comparators.

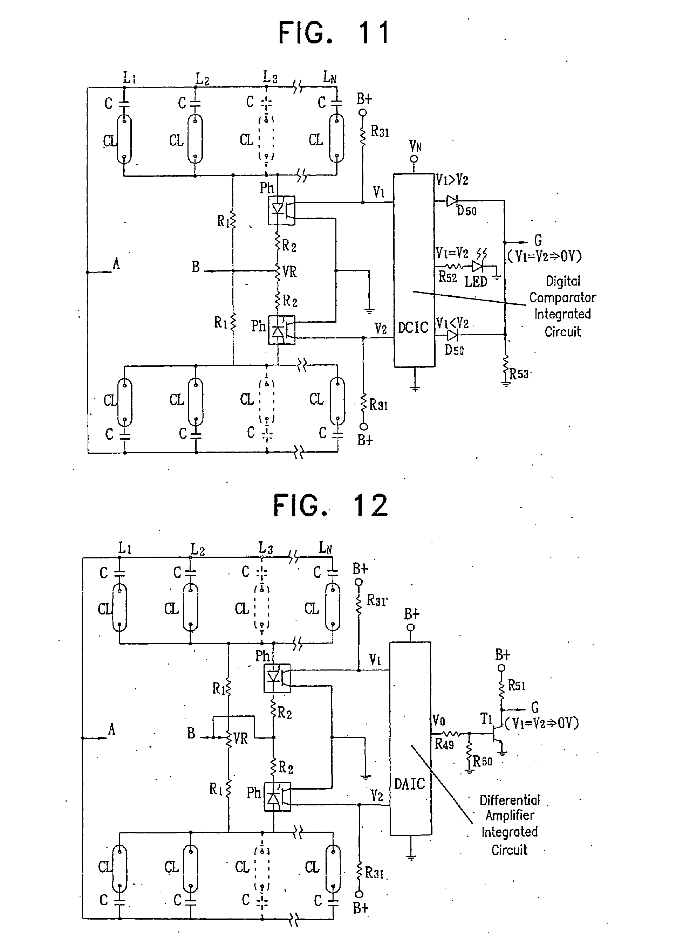

In a ninth embodiment as shown in Fig. 11, DCIC is used to replace the DAIC of Fig. 10 schematic. The conditions of input terminals V1 and V2 are exactly the same, while the output end comprises three sets: V1 > V2, V1=V2, and V1 < V2. When V1=V2, its output terminal is positive, passing through a limit current resistor R52 before connecting to the P-type terminal of LED, while the N-type terminal of LED is grounded. At this time the LED is on, while the output voltage terminal of V1 > V2 and V1 < V2, namely the electrical potential of G terminal is zero. Both V1 > V2 and V1 < V2 terminals are serial connected with unilateral diode D50 to G terminal. When V1≠V2, G terminal can receive a positive output, and is further coupled with a grounding resistor R53, functioning to keep G terminal at zero potential. The preferred embodiment is characterised by an additional set of V1=V2 equilibrium indicator and an additional DCIC, and the power supply voltage Vn to the DCIC is contingent upon the choice of IC variety without limitation. In this preferred embodiment, the DCIC may be replaced with up and down limit comparators.

As shown in Fig. 12, the balance resistor VR capable of equilibrium tuning applied in the eighth embodiment of Fig. 10 is allocated from the limit current resistor R2 to connect to the circuit of the measure resistor R1, characterised by the two ends of the variable resistor VR are connected to the measure resistor R1, and the mid-point to B point, and concurrently the mid-point of the two limit current resistors R2 is also connected to B point. The function is suited for CCFL clusters of small consumption. In this preferred embodiment, the DAIC may be replaced with up and down limit comparators.

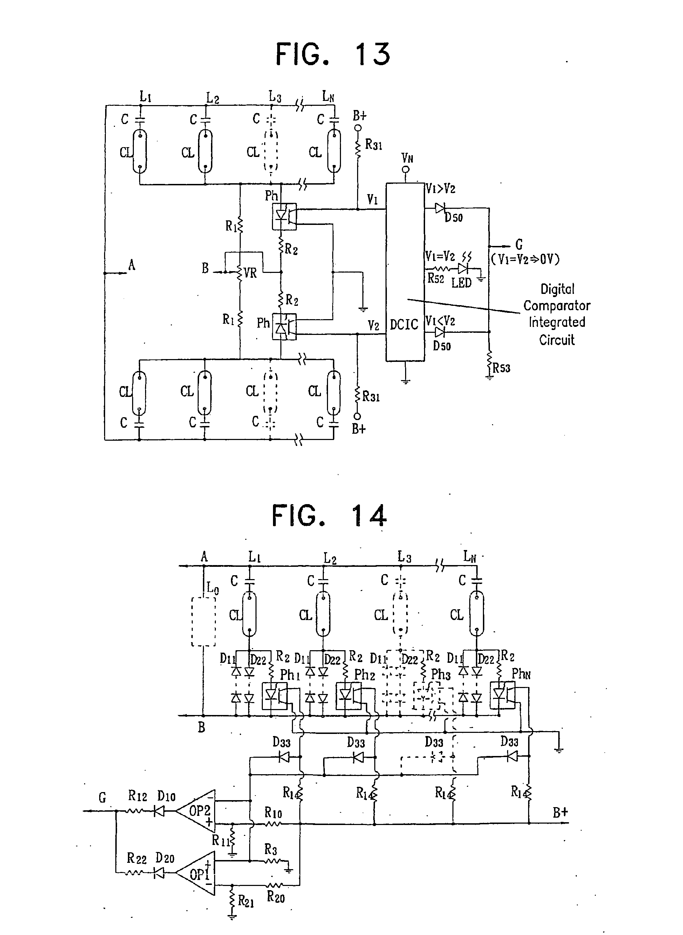

As shown in Fig. 13, the balance resistor VR capable of equilibrium tuning applied in the ninth embodiment of Fig. 11 is allocated from the limit current resistor R1 to connect to the circuit of the measure resistor R2, characterised by the two ends of the variable resistor VR are connected to the measure resistor R1, and the mid-point to B point, and concurrently the mid-point of the two limit current resistors R2 is also connected to B point. The function is suited for CCFL clusters of small consumption. In this preferred embodiment, the DCIC may be replaced with up and down limit comparators.

In a tenth embodiment as shown in Fig. 14, the serial connection of the secondary of the photocouplers Ph1, Ph2, Ph3 ... PhN is altered to independent photocoupler circuits. The diagram of Fig. 14 shows that each photocoupler Ph1, Ph2, Ph3 ... PhN has a resistor R14 and unilateral output diode D33. One end of the resistor R14 is connected directly to power source B+, the other end to the collect-emitter terminal of the photocoupler secondary and the P-type terminal of unilateral diode D33. The emitter terminal of the photocoupler secondary is connected to the negative terminal of the DC power, while the N-type terminal of the unilateral diode D33 is conjoined with all the N-type terminals of unilateral diode D33 of all photocouplers Ph1, Ph2, Ph3 ... PhN, and further connected to the noninverter terminal of the up limit comparator OP1 and the inverter terminal of the down up limit comparator OP2. The functioning principle is that when CCFLs L1, L2, L3.. LN on the AB terminal are functioning normally, the N-type terminal of the unilateral diode D33 has no output voltage; the noninverter terminal of the up limit comparator OP1 and the N-type terminal of the unilateral diode D33 are joined together as when the voltage at the noninverter terminal of the up limit comparator OP1 is zero, the output terminal G is zero voltage. If any CCFL of CCFL Cluster L1, L2, L3 ... LN open-circuits, the noninverter terminal of the up limit comparator OP1 will have a positive voltage, enabling the output terminal G to have a positive voltage that subject voltage to thyristor of SCR220 of the electronic ballast 200, resulting in eliminating HF voltage at the A and B terminals to achieve protection of CCFL quality.

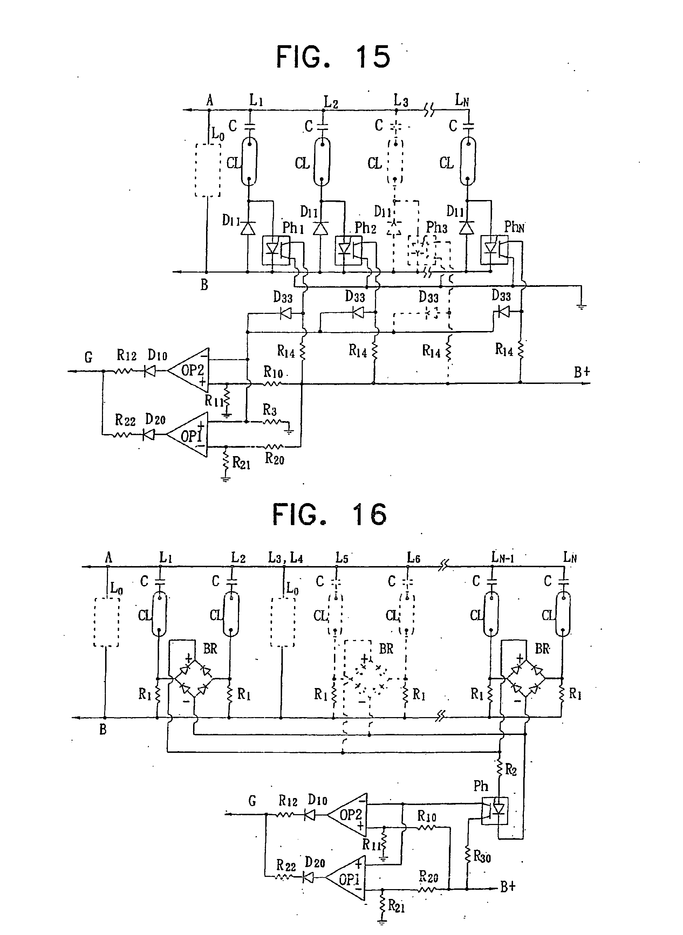

In an eleventh embodiment as shown in Fig. 15, if the lamp current of CCFL Cluster L1, L2, L3 ... LN is smaller than the LED current of the photocouplers Ph1, Ph2, Ph3 ... PhN, the LED of the photocouplers may be directly connected to the circuit, namely changing Fig. 14 diagram to the one presented in Fig. 15. The functioning principle of Fig. 15 is the same as Fig. 14, but simplified, provided the premises being that the current borne by photocoupler LED shall be greater than the CCFL current to deter burning photocoupler LED.

In a twelfth embodiment as shown in Fig. 16, the schematic is a reconfiguration of Fig. 6 diagram's measure resistor R1 and bridge rectifier BR. The functioning principle lies with the two AC terminals of the bridge rectifier BR are connected to L1 and L2 measure resistor R1. When the lamp current of the two CCFL clusters L1 and L2 is the same, the positive and negative terminals of the bridge rectifier BR will be zero concurrently. If the current of the two CCFL. clusters L1 and L2 is different, the potentials of the positive and negative terminals of the bridge rectifier BR will be different, ensuing a voltage. This voltage travels from the positive terminal through the limit current resistor R2 to reach the LED terminal of the photocoupler Ph. At this time, the secondary collect-emitter terminal of the photocoupler Ph is conducted, DC power BHF passing through the limit current resistor R30, then the collect-emitter of the photocoupler Ph to reach the positive terminal of the up limit comparator OP1 and the negative end of the down limit comparator OP2. At this time the output terminal G of the comparators has a positive current output to eliminate the HE voltage at AR terminal in achieving the goal of protecting CCFL cluster function and quality. The circuit is characterised by L1 and L2, L3, and L4, L5 and L6, ... LN-1 and LN, every pair of CCFLs share a bridge rectifier BR, and all the positive terminals of the bridge rectifiers BR are connected together, and ail the negative terminals of the bridge rectifiers BR are also connected together.

In summary, the preferred embodiment pertains to a type of device for measuring and protecting CCFL, mainly utilising a type of electronic ballast to serve as HF power source for the backlighting of multiple cold cathode fluorescent lamps by means of serial connect one end of each cold cathode fluorescent lamp of parallel connected CCFL Cluster with a measure element; said element provides power source for the photocoupler LED. Concurrently, the photocouplers' collect-emitter terminals are joined in serial connection, and then employ comparators to determine any short circuit, over current, or under current occurred within the CCFL Cluster, thus protecting the cold cathode fluorescent lamps to achieve large LCD monitors' quality requirement and performance protection.

## Claims

1. A protective device for cold cathode fluorescent lamps (CCFL), said device comprising:
a CCFL Cluster formed by joining multiple CCFL sets (L0, L1 ... LN) through parallel connection; each of said CCFL set comprising HF HV capacitor (C), cold cathode fluorescent lamp (CL), measure resistor (R1), and photocoupler (Ph1 ... PhN) primary; wherein the HV capacitor, cold cathode fluorescent lamp and measure resistor are serially connected, and two terminals of the CCFL set are connected to HF HV terminal; while the two terminals of the measure resistor are coupled in parallel connection with the photocoupler LED terminal, preferably in serial connection with a limit current resistor (R2), and;
a protection circuit (100), wherein the photocoupler's transistors are coupled in series and connected to up and down limit comparators (OP1, OP2), so that when the up and down limit comparators send out signals, HF power source is cut off ;for protecting the CCFL cluster against open circuit and over current; and
a time delay circuit (300), for inhibitting the protection circuit during the transient state after the power ON.

2. The protective device according to claim 1, wherein the measure resistor of the CCFL set comprises first and second diode clusters (D11, D22); the first and second diode clusters consisting of one or multiple diodes, and wherein the disposed directions of the first and second diode clusters are opposite.

3. The protective device according to claim 1, wherein the CCFL set's measure resistor may be Zener diode (Dz).

4. The protective device according to claim 1, wherein the two terminals of the measure resistor (R1) of the CCFL set parallel connect to the AC terminals of a bridge rectifier (BR); the bridge rectifier's DC positive terminal connects to the limit current resistor (R2) and photocoupler (Ph1) LED terminal, then connects to the bridge rectifier's DC negative terminal; the power source supply to photocoupler LED terminal still coming from the two terminals of the measure resistor (R1).

5. The protective device according to claim 4, wherein the measure resistor of the CCFL set comprises first and second diode clusters (D11, D22); the first and second diode clusters consisting of one or multiple diodes, and wherein the disposed directions of the first and second diode clusters are opposite.

6. The protective device according to claim 4, wherein the measure resistor of the CCFL set may be first and second Zener diodes (Dz1, Dz2); and the disposed directions of the first and second Zener diodes are opposite.

7. The protective device according to claim 1, wherein two CCFL sets (L0, L1 ... LN) share a set of up and down limit comparators, and within each CCFL Cluster all lamps (CL) are connected to one end to share a measure resistor (R1; Fig. 9); the limit current resistor (R2) and the photocoupler (Ph) are serially connected, then parallel coupled with the measure resistor's two terminals; the photocoupler's emitter terminal is joined with a diode (D30), and the diode's N terminal and grounding resistor (R3) are connected to the positive and negative terminals of the up, down limit comparators, respectively, while the two sets of measure resistor and limit current resistors are interconnected.

8. The protective device according to claim 7, wherein the measure resistor of the CCFL set comprises first and second diode clusters (D11, D22); the first and second diode clusters consisting of one or multiple diodes, and wherein the disposed directions of the first and second diode clusters are opposite.

9. The protective device according to claim 7, wherein the CCFL set's measure resistor may be Zener diode.

10. The protective device according to claim 7, wherein the two terminals of the measure resistor (R1) of the CCFL set parallel connect to the AC terminal of a bridge rectifier (BR); the bridge rectifier's DC positive terminal connects to the limit current resistor (R2) and photocoupler (Ph1) LED terminal, then connects to the bridge rectifier's DC negative terminal; the power source supply to photocoupler LED terminal still coming from the two terminals of the measure resistor (R1).

11. The protective device according to claim 10, wherein the measure resistor of the CCFL set comprises first and second diode clusters (D11, D22); the first and second diode clusters consisting of one or multiple diodes, and wherein the disposed directions of the first and second diode clusters are opposite.

12. The protective device according to claim 10, wherein the measure resistor of the CCFL set may be first and second Zener diodes (Dz1, Dz2); and the disposed directions of the first and second Zener diodes are opposite.

13. The protective device according to claim 1, wherein two CCFL or even numbers of CCFL Clusters share a set of up and down limit comparators; within each CCFL Cluster, all lamps are connected to one end to share a measure resistor (R1); after the limit current resistor (R2) with a variable resistor (VR) and the photocoupler LED are serially connected, then parallel coupled with the measure resistor's two terminals, the variable resistor's mid-point terminal is coupled with one end of the measure resistor (Fig. 10), the photocoupler's emitter terminal is grounded, and the collect-emitter terminal connected to the up and down limit comparators.

14. The protective device according to claim 1, wherein two CCFL or even numbers of CCFL Clusters share a set of up and down limit comparators and within each CCFL Cluster, all lamps are connected at one end to share a measure resistor (R1); the limit current resistor (R2) with a variable resistor (VR) and the photocoupler LED are serially connected, then parallel coupled with the two terminals formed by serial connection of the measure resistor and the variable resistor, the variable resistor's mid-point terminal is coupled with the middle of two limit current resistors (Fig. 11), the photocoupler's emitter terminal is grounded, and the collect-emitter terminal connected to the up and down limit comparators.

15. The protective device according to claim 2, wherein the protect circuit's photocoupler (Ph) is parallel connected with the diode clusters, the collect-emitter terminal couples with a resistor (R14) and diode (D33), then connects to the up and down limit comparators, so that when the up and down limit comparators send out signals, HF power source is off.

16. The protective device according to claim 15, wherein the measure resistor of the CCFL set is comprised by a diode (D11), and the photocoupler LED is in parallel with this diode (Fig. 15).

17. The protective device according to claim 4, wherein two CCFL sets (L0, L1 ... LN) share a bridge rectifier (BR); the bridge rectifier's DC terminals are connected to the measure resistor; the bridge rectifier's DC positive terminal connects to the limit current resistor (R2) and photocoupler (Ph) LED terminal, then connects to the bridge rectifier's DC negative terminal; the power source supply to the photocoupler LED terminal still comes from the two terminals of the measure resistor; and wherein the protect circuit's photocoupler may be single (Fig. 16) or multiple (Fig. 7).

18. The protective device according to claim 17, wherein the protect circuit's photocoupler (Ph) is joined in parallel connection to the up and down limit comparators (OP1, OP2), so that when the up and down limit comparators send out signals, HF power source is cut off.

19. The protective device according to claim 1, wherein the protect circuit's up, down limit comparators comprise a differential amplifier integrated circuit (DAIC).

20. The protective device according to claim 1, wherein the protect circuit's up, down limit comparators comprise a digital comparator integrated circuit (DCIC).

21. A measure device for cold cathode fluorescent lamps, said device comprising:
a high frequency power source circuit utilising AC power source; and
a protective device in accordance with any of claims 1 to 20;
wherein the functioning time deferred bt the time delay circuit is contingent upon the number, characteristic and quality of a CCFL Cluster.

22. The measure device according to claim 21, further comprising a DC power source circuit, wherein the output terminal's DC voltage supplies the CCFL Cluster, the protect circuit, and the time delay circuit, or internal, external power supply from other independent system.

23. The measure device according to claim 21, wherein the high frequency power source circuit comprises a full-bridge type electronic ballast.

24. The measure device according to claim 21, wherein the high frequency power source circuit comprises a half-bridge type electronic ballast.

## Patentansprüche

1. Schutzvorrichtung für Kaltkathoden-Leuchtstofflampen (CCFL), wobei die genannte Vorrichtung Folgendes umfasst:
eine durch Verbinden mehrerer CCFL-Sätze (L0, L1 ... LN) durch Parallelschaltung gebildete CCFL-Gruppe, wobei jeder genannte CCFL-Satz einen Hochfrequenz-Hochspannungskondensator (C), eine Kaltkathoden-Leuchtstofflampe (CL), einen Messwiderstand (R1) und das Primärteil eines Optokopplers (Ph1 ... phN) aufweist, wobei der Hochspannungskondensator, die Kaltkathoden-Leuchtstofflampe und der Messwiderstand in Reihe geschaltet sind und zwei Anschlüsse des CCFL-Satzes mit dem Hochfrequenz-Hochspannungsanschluss verbunden sind, während die zwei Anschlüsse des Messwiderstands in Parallelschaltung mit dem Optokoppler-LED-Anschluss, vorzugsweise in Reihenschaltung mit einem Grenzstromwiderstand V(R2), verbunden sind, und
eine Schutzschaltung (100), bei der die Transistoren des Optokopplers in Reihe geschaltet sind und mit einem oberen und einem unteren Grenzwertkomparator (OP1, OP2) verbunden sind, so dass, wenn der obere und untere Grenzwertkomparator Signale aussenden, die Hochfrequenz-Stromquelle abgeschaltet wird, um die CCFL-Gruppe gegen Stromkreisunterbrechung und Überstrom zu schützen, und
eine Verzögerungsschaltung (300) zum Sperren der Schutzschaltung während des Übergangszustands nach dem Einschalten.

2. Schutzvorrichtung nach Anspruch 1, bei der der Messwiderstand des CCFL-Satzes erste und zweite Diodengruppen (D11, D22) aufweist, wobei die ersten und zweiten Diodengruppen aus einer oder mehreren Dioden bestehen, und bei der die angeordneten Richtungen der ersten und zweiten Diodengruppen einander entgegengesetzt sind.

3. Schutzvorrichtung nach Anspruch 1, bei der der Messwiderstand des CCFL-Satzes eine Zener-Diode (Dz) sein kann.

4. Schutzvorrichtung nach Anspruch 1, bei der die zwei Anschlüsse des Messwiderstands (R1) des CCFL-Satzes mit den Wechselstromanschlüssen eines Brückengleichrichters (BR) parallel geschaltet sind, der positive Gleichstromanschluss des Brückengleichrichters mit dem Grenzstromwiderstand (R2) und dem LED-Anschluss des Optokopplers (Phl) verbunden ist, dann mit dem negativen Gleichstromanschluss des Brückengleichrichters verbunden ist, wobei die Stromquellenzuleitung zum LED-Anschluss des Optokopplers immer noch von den zwei Anschlüssen des Messwiderstands (R1) kommt.

5. Schutzvorrichtung nach Anspruch 4, bei der der Messwiderstand des CCFL-Satzes erste und zweite Diodengruppen (D11, D22) aufweist, wobei die ersten und zweiten Diodengruppen aus einer oder mehreren Dioden bestehen, und bei der die angeordneten Richtungen der ersten und der zweiten Diodengruppen einander entgegengesetzt sind.

6. Schutzvorrichtung nach Anspruch 4, bei der der Messwiderstand des CCFL-Satzes erste und zweite Zener-Dioden (Dz1, Dz2) sein können und die angeordneten Richtungen der ersten und zweiten Zener-Dioden einander entgegengesetzt sind.

7. Schutzvorrichtung nach Anspruch 1, bei der zwei CCFL-Sätze (L0, L1 ... LN) einen Satz oberer und unterer Grenzwertkomparatoren gemeinsam nutzen und wobei in jeder CCFL-Gruppe alle Lampen (CL) an einem Ende zusammengeschaltet sind, um einen Messwiderstand (R1; Fig. 9) gemeinsam zu nutzen, der Grenzstromwiderstand (R2) und der Optokoppler (Ph) in Reihe geschaltet sind, dann mit den zwei Anschlüssen des Messwiderstands parallel geschaltet sind; wobei der Emitter-Anschluss des Optokopplers an eine Diode (D30) angefügt ist und der N-Anschluss der Diode und der Erdungswiderstand (R3) mit dem positiven und negativen Anschluss des oberen bzw. unteren Grenzwertkomparators verbunden sind, während die zwei Sätze von Messwiderstand und Grenzstromwiderständen miteinander verbunden sind.

8. Schutzvorrichtung nach Anspruch 7, bei der der Messwiderstand des CCFL-Satzes erste und zweite Diodengruppen (D11, D22) aufweist, wobei die ersten und zweiten Diodengruppen aus einer oder mehreren Dioden bestehen, und bei der die angeordneten Richtungen der ersten und zweiten Diodengruppen einander entgegengesetzt sind.

9. Schutzvorrichtung nach Anspruch 7, bei der der Messwiderstand des CCFL-Satzes eine Zener-Diode sein kann.

10. Schutzvorrichtung nach Anspruch 7, bei der die zwei Anschlüsse des Messwiderstands (R1) des CCFL-Satzes mit dem Wechselstromanschluss eines Brückengleichrichters (BR) parallel geschaltet sind, der positive Gleichstromanschluss des Brückengleichrichters mit dem Grenzstromwiderstand (R2) und dem LED-Anschluss des Optokopplers (Ph1) verbunden ist, dann mit dem negativen Gleichstromanschluss des Brückengleichrichters (BR) verbunden ist, wobei die Stromquellenzuleitung zum LED-Anschluss des Optokopplers immer noch von den zwei Anschlüssen des Messwiderstands (R1) kommt.

11. Schutzvorrichtung nach Anspruch 10, bei der der Messwiderstand des CCFL-Satzes erste und zweite Diodengruppen (D11, D22) aufweist, wobei die ersten und zweiten Diodengruppen aus einer oder mehreren Dioden bestehen, und bei der die angeordneten Richtungen der ersten und zweiten Diodengruppen einander entgegengesetzt sind.

12. Schutzvorrichtung nach Anspruch 10, bei der der Messwiderstand des CCFL-Satzes erste und zweite Zener-Dioden (Dz1, Dz2) sein können und die angeordneten Richtungen der ersten und zweiten Zener-Dioden einander entgegengesetzt sind.

13. Schutzvorrichtung nach Anspruch 1, bei der zwei CCFL oder eine gerade Zahl von CCFL-Gruppen einen Satz oberer und unterer Grenzwertkomparatoren gemeinsam nutzen, in jeder CCFL-Gruppe alle Lampen an einem Ende zusammengeschaltet sind, um einen Messwiderstand (R1) gemeinsam zu nutzen, danach der Grenzstromwiderstand (R2) mit einem Stellwiderstand (VR) und die Optokoppler-LED in Reihe geschaltet sind, dann mit den zwei Anschlüssen des Messwiderstands parallel geschaltet sind, wobei der mittlere Anschluss des Stellwiderstands mit einem Ende des Messwiderstands (Fig. 10) verbunden ist, der Emitter-Anschluss des Optokopplers geerdet ist und der Kollektor-Emitter-Anschluss mit den oberen und unteren Grenzwertanschlüssen verbunden ist.

14. Schutzvorrichtung nach Anspruch 1, bei der zwei CCFL oder eine gerade zahl von CCFL-Gruppen einen Satz oberer und unterer Grenzwertkomparatoren gemeinsam nutzen und in jeder CCFL-Gruppe alle Lampen an einem Ende zusammengeschaltet sind, um einen Messwiderstand (R1) gemeinsam zu nutzen, der Grenzstromwiderstand (R2) mit einem Stellwiderstand (VR) und die Optokoppler-LED in Reihe geschaltet sind, dann mit den zwei Anschlüssen, die durch Reihenschaltung des Messwiderstands und des Stellwiderstands hergestellt sind, parallel geschaltet sind; wobei der mittlere Anschluss des Stellwiderstands mit der Mitte von zwei Grenzstromwiderständen (Fig. 11) verbunden ist, der Emitter-Anschluss des Optokopplers geerdet ist und der Kollektor-Emitter-Anschluss mit den oberen und unteren Grenzwertanschlüssen verbunden ist.

15. Schutzvorrichtung nach Anspruch 2, bei der der Optokoppler (Ph) der Schutzschaltung mit den Diodengruppen parallel geschaltet ist, der Kollektor-Emitter-Anschluss mit einem Widerstand (R14) und einer Diode (D33) gekoppelt ist, dann mit dem oberen und unteren Grenzwertkomparator verbunden ist, so dass, wenn der obere und untere Grenzwertkomparator Signale aussenden, die Hochfrequenz-Stromquelle abgeschaltet wird.

16. Schutzvorrichtung nach Anspruch 15, bei der der Messwiderstand des CCFL-Satzes eine Diode (D11) umfasst und die Optokoppler-LED mit dieser Diode parallel geschaltet ist (Fig. 15).

17. Schutzvorrichtung nach Anspruch 4, bei der zwei CCFL-Sätze (L0, L1 ... LN) einen Brückengleichrichter (BR) gemeinsam nutzen, die Gleichstromanschlüsse des Brückengleichrichters mit dem Messwiderstands verbunden sind, der positive Gleichstromanschluss des Brückengleichrichters mit dem Grenzstromwiderstand (R2) und dem LED-Anschluss des Optokopplers (Ph1) verbunden ist, dann mit dem negativen Gleichstromanschluss des Brückengleichrichters verbunden ist, wobei die Stromquellenzuleitung zum LED-Anschluss des Optokopplers immer noch von den zwei Anschlüssen des Messwiderstands kommt und wobei der Optokoppler der Schutzschaltung ein einzelner (Fig. 16) oder mehrere (Fig. 7) Optokoppler sein kann.

18. Schutzvorrichtung nach Anspruch 17, bei der der Optokoppler (Ph) der Schutzschaltung in Parallelschaltung an den oberen und unteren Grenzwertkomparator (OP1, OP2) angefügt ist, so das, wenn der obere und untere Grenzwertkomparator Signale aussenden, die Hochfrequenz-Stromquelle abgeschaltet wird.

19. Schutzvorrichtung nach Anspruch 1, bei der der obere, untere Grenzwertkomparator eine integrierte Differenzverstärkerschaltung (DAIC) umfassen.

20. Schutzvorrichtung nach Anspruch 1, bei der der obere, untere Grenzwertkomparator eine integrierte Digitalkomparatorschaltung (DCIC) umfassen.

21. Messvorrichtung für Kaltkathoden-Leuchtstofflampen, wobei die genannte Vorrichtung Folgendes umfasst:
eine Hochfrequenz-Stromquellenschaltung, die eine Wechselstromquelle nutzt, und
eine Schutzvorrichtung nach einem der Ansprüche 1 bis 20,
wobei die von der Verzögerungsschaltung verzögerte Funktionszeit von der Zahl, Charakteristik und Qualität einer CCFL-Gruppe abhängig ist.

22. Messvorrichtung nach Anspruch 21, ferner umfassend eine Gleichstromquellenschaltung, wobei die Gleichspannung des Ausgangsanschlusses die CCFL-Gruppe, die Schutzschaltung und die verzögerungsschaltung versorgt, oder eine interne/externe Stromversorgung von einem anderen unabhängigen System.

23. Messvorrichtung nach Anspruch 21, bei der die Hochfrequenz-Stromquellenschaltung ein elektronisches vorschaltgerät vom vollbrückentyp aufweist.

24. Messvorrichtung nach Anspruch 21, bei der die Hochfrequenz-Stromquellenschaltung ein elektronisches Vorschaltgerät vom Halbbrückentyp aufweist.

## Revendications

1. Dispositif de protection pour lampes fluorescentes à cathode froide (CCFL), ledit dispositif comprenant :
un groupe CCFL formé en joignant de multiples jeux CCFL (L0, L1...LN) par des connexions en parallèle; chacun desdits jeux CCFL comprenant un condensateur HF HT (C), une lampe fluorescente à cathode froide (CL), une résistance de mesure (R1) et une primaire de photocoupleur (Ph1...PhN); où le condensateur HT, la lampe fluorescente à cathode froide et la résistance de mesure sont connectés en série et deux bornes du jeu CCFL sont connectées à une borne HF HT; tandis que deux bornes de la résistance de mesure sont couplées en connexion parallèle à la borne DEL du photocoupleur, de préférence en connexion en série avec une résistance de limitation de courant (R2); et
un circuit de protection (100), dans lequel les transistors du photocoupleur sont couples en série et connectés à des comparateurs de limite vers le haut et vers le bas (OP1, OP2), de sorte que lorsque les comparateurs de limite vers le haut et vers le bas envoient des signaux, la source de puissance HF est coupée afin de protéger le groupe CCFL contre un circuit ouvert et une surintensité; et
un circuit de temporisation (300) pour inhiber le circuit de protection durant l'état transitoire après la mise sous tension.

2. Le dispositif de protection selon la revendication 1, dans lequel la résistance de mesure du jeu CCFL comprend un premier et un deuxième groupes de diodes (D11, D22); le premier et le deuxième groupes de diodes consistant en une diode ou en des diodes multiples et dans lequel les directions d'emplacement des premier et deuxième groupes de diodes sont opposées.

3. Le dispositif de protection selon la revendication 1, dans lequel la résistance de mesure du jeu CCFL peut être une diode Zener (Dz).

4. Le dispositif de protection selon la revendication 1, dans lequel les deux bornes de la résistance de mesure (R1) du jeu CCFL sont connectées en parallèle aux bornes CA d'un redresseur en pont (BR); la borne positive CC du redresseur en pont est connectée à la résistance de limitation de courant (R2) et à la borne DEL du photocoupleur (Ph1), puis connectée à la borne négative CC du redresseur en pont; l'alimentation source de puissance de la borne DEL du photocoupleur venant toujours des deux bornes de la résistance de mesure (R1).

5. Le dispositif de protection selon la revendication 4, dans lequel la résistance source du jeu CCFL comprend un premier et un deuxième groupes de diodes (D11, D22); le premier et le deuxième groupes de diodes consistant en une diode ou en des diodes multiples et dans lequel les directions d'emplacement des premier et deuxième groupes de diodes sont opposées.

6. Le dispositif de protection selon la revendication 4, dans lequel la résistance de mesure du jeu CCFL peut être une première et une deuxième diodes Zener (Dz1, Dz2) et les directions d'emplacement des première et deuxième diodes Zener sont opposées.

7. Le dispositif de protection selon la revendication 1, dans lequel deux jeux CCFL (L0, L1 ...LN) partagent un jeu de comparateurs de limite vers le haut et vers le bas et dans chaque groupe CCFL toutes les lampes (CL) sont connectées à une extrémité pour partager une résistance de mesure (R1, Fig.9); la résistance de limitation de courant (R2) et le photocoupleur (Ph) sont connectés en série puis couplés en parallèle aux deux bornes de la résistance de mesure; la borne de l'émetteur du photocoupleur est jointe à une diode (D30) et la borne N et la résistance de mise à la terre (R3) de la diode sont connectées aux bornes positives et négatives des comparateurs de limite vers le haut et vers le bas, respectivement, tandis que les deux jeux de résistance de mesure et de résistances de limitation de courant sont interconnectés.

8. Le dispositif de protection selon la revendication 7, dans lequel la résistance de mesure du jeu CCFL comprend un premier et un deuxième groupes de diodes (D11, D22); le premier et le deuxième groupes de diodes consistant en une diode ou en des diodes multiples et dans lequel les directions d'emplacement des premier et deuxième groupes de diodes sont opposées.

9. Le dispositif de protection selon la revendication 7, dans lequel la résistance de mesure du jeu CCFL peut être une diode Zener.

10. Le dispositif de protection selon la revendication 7, dans lequel les deux bornes de la résistance de mesure (R1) du jeu CCFL sont connectées en parallèle à la borne CA d'un redresseur en pont (BR); la borne positive CC du redresseur en pont est connectée à la résistance de limitation de courant (R2) et à la borne DEL du photocoupleur (Ph1), puis connectée à la borne négative CC du redresseur en pont; l'alimentation source de puissance de la borne DEL du photocoupleur venant toujours des deux bornes de la résistance de mesure (RI).

11. Le dispositif de protection selon la revendication 10, dans lequel la résistance de mesure du jeu CCFL comprend un premier et un deuxième groupes de diodes (D11, D22); le premier et le deuxième groupes de diodes consistant en une diode ou en des diodes multiples et dans lequel les directions d'emplacement des premier et deuxième groupes de diodes sont opposées.

12. Le dispositif de protection selon la revendication 10, dans lequel la résistance de mesure du jeu CCFL peut être une première et une deuxième diodes Zener (Dz1, Dz2) et les directions d'emplacement des première et deuxième diodes Zener sont opposées.

13. Le dispositif de protection selon la revendication 1, dans lequel deux CCFL ou des nombres pairs de groupes CCFL partagent un jeu de comparateurs de limite vers le haut et vers le bas; dans chaque groupe CCFL toutes les lampes sont connectées à une extrémité pour partager une résistance de mesure (R1); après que la résistance de limitation de courant (R2) avec une résistance variable (VR) et la DEL du photocoupleur eussent été connectées en série puis couplées en parallèle aux deux bornes de la résistance de mesure, la borne du point milieu de la résistance variable est couplée à une extrémité de la résistance de mesure (Fig.10), la borne de l'émetteur du photocoupleur est mise à la terre et la borne de collecteur-émetteur est connectée aux comparateurs de limite vers le haut et vers le bas.

14. Le dispositif de protection selon la revendication 1, dans lequel deux CCFL ou des nombres pairs de groupes CCFL partagent un jeu de comparateurs de limite vers le haut et vers le bas et, dans chaque groupe CCFL, toutes les lampes sont connectées à une extrémité pour partager une résistance de mesure (R1); la résistance de limitation de courant (R2) avec une résistance variable (VR) et la DEL du photocoupleur sont connectées en série puis couplées en parallèle aux deux bornes formées par la connexion en série de la résistance de mesure et de la résistance variable, la borne du point milieu de la résistance variable est couplée au milieu de deux résistances de limitation de courant (Fig.11), la borne de l'émetteur du photocoupleur est mise à la terre et la borne de collecteur-émetteur est connectée aux comparateurs de limite vers le haut et vers le bas.

15. Le dispositif de protection selon la revendication 2, dans lequel le photocoupleur (Ph) du circuit de protection est connecté en parallèle aux groupes de diodes, la borne de collceteur-émetteur est couplée à une résistance (R14) et à une diode (D33) puis connectée aux comparateurs de limite vers le haut et vers le bas, de sorte que lorsque les comparateurs de limite vers le haut et vers le bas envoient des signaux, la source de puissance HF est coupée.

16. Le dispositif de protection selon la revendication 15, dans lequel la résistance de mesure du jeu CCFL consiste en une diode (D11) et la DEL du photocoupleur est en parallèle avec cette diode (Fig.15).

17. Le dispositif de protection selon la revendication 4, dans lequel deux jeux CCFL (L0, L1...LN) partagent un redresseur en pont (BR); les bornes CC du redresseur en pont sont connectées à la résistance de mesure; la borne positive CC du redresseur en pont est connectée à la résistance de limitation de courant (R2) et à la borne DEL du photocoupleur (Ph) puis connectée à la borne négative CC du redresseur en pont; l'alimentation source de puissance de la borne DEL du photocoupleur vient toujours des deux bornes de la résistance de mesure, et dans lequel le photocoupleur du circuit de protection peut être unique (Fig. 16) ou multiple (Fig.7).

18. Le dispositif de protection selon la revendication 17, dans lequel le photocoupleur (Ph) du dispositif de protection est joint en une connexion en parallèle aux comparateurs de limite vers le haut et vers le bas (OP1, OP2), de sorte que lorsque les comparateurs de limite vers le haut et vers le bas envoient des signaux, la source de puissance HF est coupée.

19. Le dispositif de protection selon la revendication 1, dans lequel les comparateurs de limite vers le haut et vers le bas du circuit de protection comprennent un circuit intégré amplificateur différentiel (DAIC).

20. Le dispositif de protection selon la revendication 1, dans lequel les comparateurs de limite vers le haut et vers le bas du circuit de protection comprennent un circuit intégré comparateur numérique (DCIC).

21. Dispositif de mesure pour lampes fluorescentes à cathode froide, ledit dispositif comprenant :
un circuit de source de puissance haute fréquence utilisant une source de puissance CA; et
un dispositif de protection selon l'une quelconque des revendications 1 à 20;
dans lequel le temps de fonctionnement différé par le circuit de temporisation dépend du nombre, de la caractéristique et de la qualité d'un groupe CCFL.

22. Le dispositif de mesure selon la revendication 21, comprenant en outre un circuit de source de puissance CC, dans lequel la tension CC de la borne de sortie alimente le groupe CCFL, le circuit de protection et le circuit de temporisation, ou une alimentation en puissance interne, externe provenant d'un autre système indépendant.

23. Le dispositif de mesure selon la revendication 21, dans lequel le circuit de source de puissance haute fréquence comprend un ballast électronique du type à pont intégral.

24. Le dispositif de mesure selon la revendication 21, dans lequel le circuit de source de puissance haute fréquence comprend un ballast électronique du type à demi-pont.
